# EUROPEAN PATENT APPLICATION

(11) **EP 1 148 702 A2**
(43) Date of publication of application: **24.10.2001**
(21) Application number: 01109534.6
(22) Date of filing: 17.04.2001
(51) Int. Cl.: H04N 1/21, H04N 1/00

(54) **Digital photograph system**

(30) Priority: 17.04.2000 JP 2000114863
(71) Applicant: MATSUSHITA ELECTRIC INDUSTRIAL CO., LTD., Kadoma-shi, Osaka 571-8501 (JP)
(72) Inventor: Matsuura, Satoshi, Kyotanabe-shi, Kyoto 610-0300 (JP); Kutsumi, Hiroshi, Moriguchi-shi, Osaka 570-0042 (JP); Ozawa, Jun, Nara-shi, Nara 631-0005 (JP); Noguchi, Eiji, Sakai-shi, Osaka 591-8021 (JP); Maruno, Susumu, Kyotanabe-shi, Kyoto 610-0354 (JP)
(74) Representative: Grünecker, Kinkeldey, Stockmair & Schwanhäusser Anwaltssozietät

(57) **Abstract**

A digital camera used for taking photographs is connected to a terminal to print one or more selected among the photographs on the spot. An advertisement supplied from an advertising server is added to the bottom of the printed photograph, to reduce the proportion of cost borne by the user with the advertisement charge. After the photograph is printed, the digital camera is collected by the terminal for recycling. The photograph can also be temporarily uploaded to the Web, so that the user can download the photograph to the user's personal computer afterwards.

## Description

### BACKGROUND OF THE INVENTION

The present invention relates to a digital photograph system using a camera for taking digital photographs.

There are conventionally known lens-equipped films (recycling cameras) available at low prices because the bodies thereof are recycled. Such recycling cameras have not only an advantage of improving the convenience for users, but also an advantage of providing a possibility of profiting from added values for film manufacturers.

The conventional recycling cameras however have the following disadvantages. Since the recycling cameras employ a silver halide photographic method, it is not possible to select a photograph to be developed during development. In addition, a plurality of cameras are required if many photographs are to be taken. In reverse, if only a few photographs are taken, the remaining part of the film is wasted, or developing of the photographs is postponed until the entire film is used.

Digital cameras, which do not involve use of a film, have an advantage that selection of a photograph and determination of the number of photographs taken can be done comparatively freely. Digital cameras however have a disadvantage that the unit price per photograph is high compared with cameras employing the silver halide photographic method.

### SUMMARY OF THE INVENTION

The object of the present invention is providing a digital photograph system capable of reducing the print unit price.

In order to attain the above object, the digital photograph system of the present invention includes: a camera having a function of storing data of a digital photograph taken; and a terminal for reading the photograph data stored in the camera, outputting the photograph data, and thereafter collecting the camera for recycling. This construction achieves recycling of the camera, and thus the print unit price can be reduced.

Alternatively, the digital photograph system of the present invention includes: a camera having a function of storing data of a digital photograph taken; a terminal for reading the photograph data stored in the camera and outputting the photograph data; and an advertising server connected to the terminal via a network, wherein the advertising server provides advertisement data to be added to the photograph data output from the terminal. By adding an advertisement to the photograph, the print unit price can be reduced.

### BRIEF DESCRIPTION OF THE DRAWINGS

FIG. **1** is a block diagram illustrating the overall construction of an embodiment of the digital photograph system of the present invention.
FIG. **2** is a conceptual view for description of recycling of a digital camera in the digital photograph system of FIG. **1.**
FIG. **3** is a conceptual view for description of a function of an advertising server in the digital photograph system of FIG. **1.**
FIG. **4** is a conceptual view for description of an alternative function of the advertising server in the digital photograph system of FIG. **1.**
FIG. **5** is an external view of the digital camera in the system of FIG. **1**.
FIG. **6** is a block diagram of a schematic construction of the digital camera in the system of FIG. **1.**
FIG. **7** is a block diagram of a detailed construction of the digital camera in the system of FIG. **1.**
FIG. **8** is a flowchart of the photographing operation of the digital camera in the system of FIG. **1.**
FIG. **9** is a flowchart of the image output operation of the digital camera in the system of FIG. **1.**
FIG. **10** is an external view of a terminal in the system of FIG. **1.**
FIG. **11** is a block diagram of a schematic construction of the terminal in the system of FIG. **1.**
FIG. **12** is a block diagram of a detailed construction of the terminal in the system of FIG. **1.**
FIG. **13** is a flowchart of the operation of reading data from the digital camera performed by the terminal in the system of FIG. **1.**
FIG. **14** is a flowchart of the operation of printing a photograph performed by the terminal in the system of FIG. **1.**
FIG. **15** is an exemplary illustration of a graphical user interface (GUI) for selecting whether or not an advertisement should be added displayed on the terminal in the system of FIG. **1.**
FIG. **16** is an exemplary illustration of a GUI for selection of a photograph to be printed displayed on the terminal in the system of FIG. **1.**
FIG. **17** is an exemplary illustration of an advertisement-added photograph printed by the terminal in the system of FIG. **1.**
FIG. **18** is an exemplary illustration of an entry form for a prize contest in the system of FIG. **1.**
FIG. **19** is a block diagram of a detailed construction of the advertising server in the system in FIG. **1.**
FIG. **20** is a flowchart of the advertisement distribution operation of the advertising server in the system of FIG. **1.**
FIG. **21** is an exemplary illustration of a GUI for selection of the photograph output destination displayed on the terminal in the system of FIG. **1.**
FIG. **22** is an exemplary illustration of a GUI for entry of an e-mail address displayed on the terminal in the system of FIG. **1.**
FIG. **23** is an exemplary illustration of photograph data to be transmitted by e-mail in the system of FIG. **1.**
FIG. **24** is an exemplary illustration of a GUI for entry of a password displayed on the terminal in the system of FIG. **1.**
FIG. **25** is an exemplary illustration of a Web registration information card output from the terminal in the system of FIG. **1.**
FIG. **26** is an exemplary illustration of a log-in screen of a photograph server on the Web in the system of FIG. **1.**
FIG. **27** is an exemplary illustration of a Web page design for browsing photographs in the system of FIG. **1.**

### DESCRIPTION OF THE PREFERRED EMBODIMENTS

Hereinafter, an embodiment of the present invention will be described with reference to the accompanying drawings.

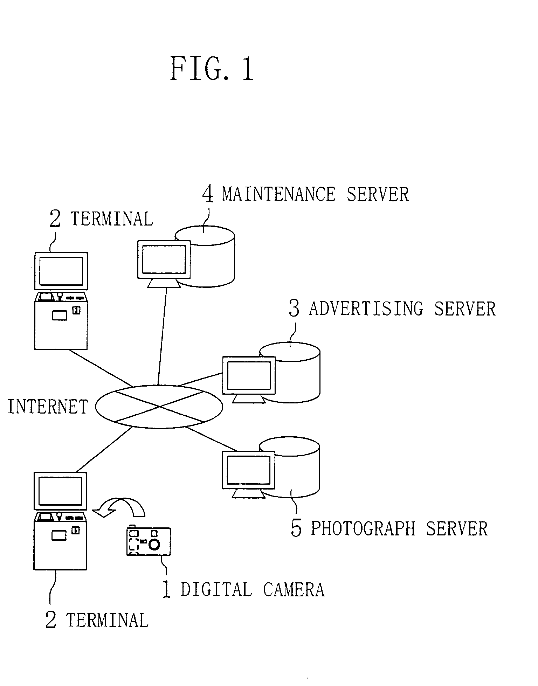

FIG. **1** illustrates the overall construction of an embodiment of the digital photograph system of the present invention. Referring to FIG. **1,** the digital photograph system of this embodiment includes: a digital camera **1** for taking digital photographs; a terminal **2** for reading data in the digital camera **1** and printing the data; an advertising server **3** for managing advertisements to be added to photographs; a maintenance server **4** for scheduling actions to be taken in response to notifications from the terminals **2** of being out of paper, out of ink, out of order, and the like; and a photograph server for temporarily storing photographs on the Web. The components **2** to **5** are connected to the Internet via dial-up connection and IP connection. The connection to the Internet may be established by other schemes, such as packet communications using Personal Handy Phone Systems (PHS) or cellular phones. The servers **3** to **5** may be implemented by one personal computer or one work station. Any of these servers may be omitted depending on the services to be provided. For example, the photograph server **5** may be omitted if the service of holding photograph data on the Web is not provided.

Using the system of FIG. **1**, the following can be realized, for example. A user purchases a digital camera **1** in a pleasure resort such as an amusement park. After taking photographs with the digital camera **1,** the user connects the digital camera **2** to the terminal **2** placed somewhere in the park and prints a photograph the user likes among others on the spot. Since the body of a digital camera costs comparatively high, the price of the digital camera should desirably include an insurance against possible failure in recovery of the body due to loss or theft. An advertisement may be printed on the bottom portion of the photograph so that the proportion of the cost borne by the user can be reduced with the advertisement charge. This advertising is also advantageous for an advertiser because it is rational to pay an amount corresponding to the number of photographs actually printed. Furthermore, the user can temporarily upload the photograph taken to the Web, to download the photograph image to the user's personal computer afterwards. This is very convenient when the user desires to reuse the photograph for making a greeting card and the like. In a facility having gates at the entrance and the exit, such as an amusement park, it is also possible to lend digital cameras to visitors who want them free of charge at the entrance, and get them back at the exit.

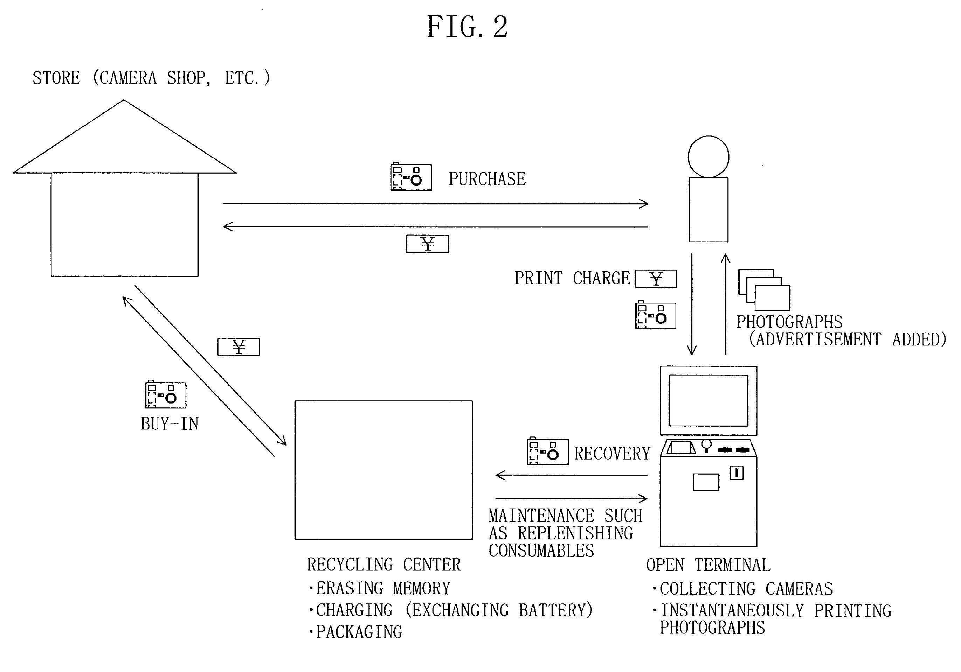

In the system of FIG. **1,** digital cameras can be recycled as illustrated in FIG. **2.** In FIG. **2,** note that the open terminal in the street may be placed inside the store.

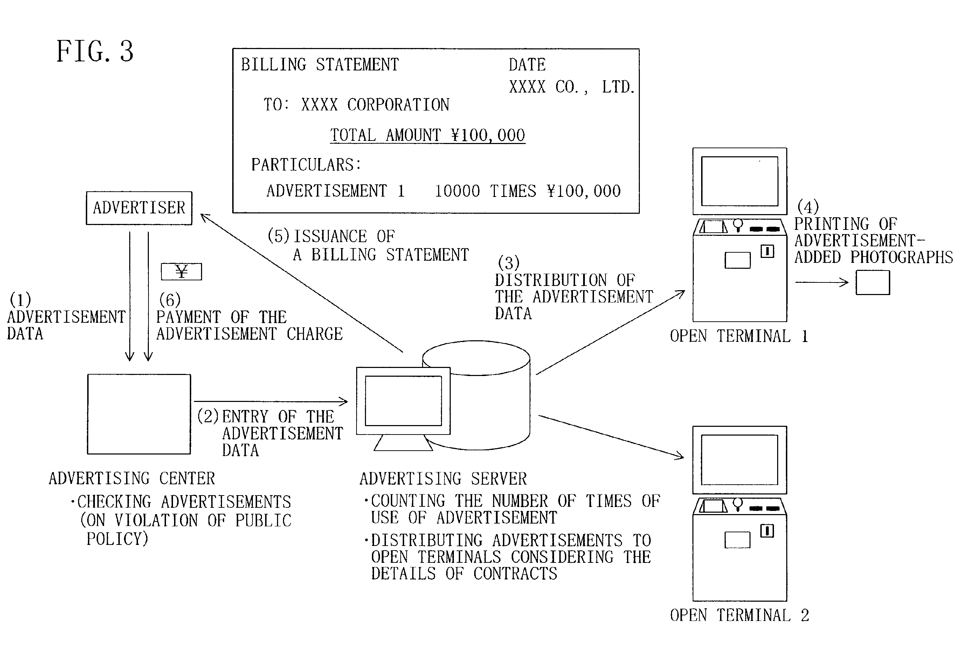

The advertising may be implemented in the procedures (1) through (6) shown in FIG. **3,** including the issuance of a billing statement to the advertiser by the advertising server. Advertising conditions, such as the area in which an advertisement should be spread and the upper limit of the number of times of printing of the advertisement, may be set at the entry of advertisement data.

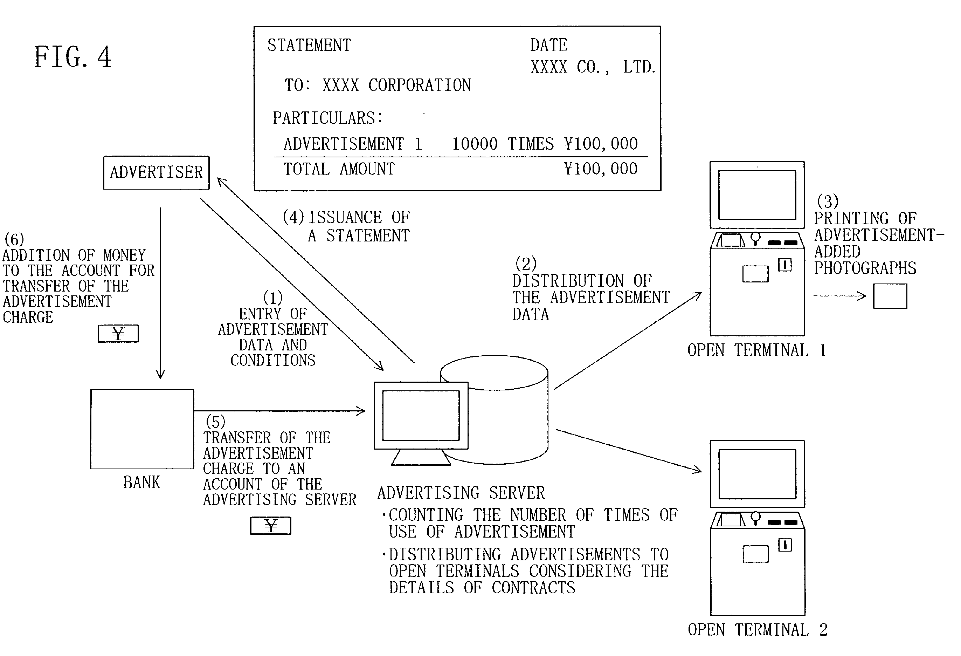

Alternatively, the advertising server may act in the procedures (1) to (6) shown in FIG. **4.** In this case, assume that the advertiser signs a contract with the advertising server in advance, together with notification of the bank account of the advertiser for automatic transfer of the charge.

Hereinafter, the respective components constituting the system of FIG. **1** will be described.

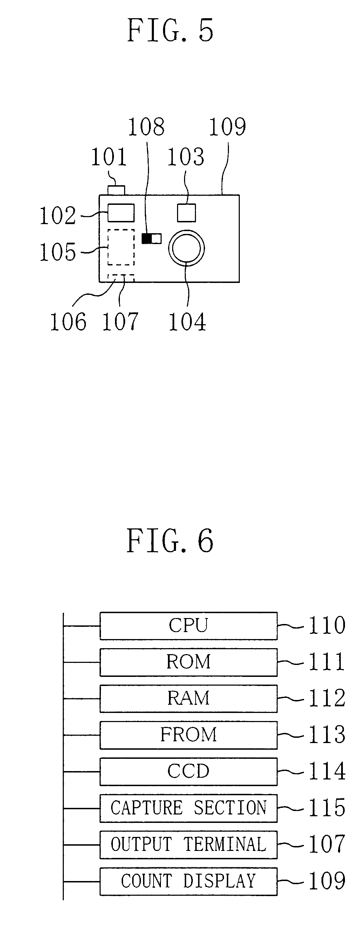

FIG. **5** is an external view of the digital camera **1** in the system of FIG. **1,** and FIG. **6** illustrates a schematic construction of the digital camera **1**, which is basically the same as that of a standard digital camera. Referring to FIG. **5,** the digital camera **1** includes a shutter **101,** a flash **102,** a finder **103,** a lens **104,** a battery **105,** a battery charging terminal **106,** an output terminal **107** for outputting data in a FROM **113,** a flash switch **108** for switching ON/OFF of the flash **102,** and a count display **109** for displaying the number of remaining photographs allowed to be taken. Referring to FIG. **6,** the digital camera **1** further includes a CPU **110** for executing a program, a ROM **111** for storing the program, a RAM **112** for reading the contents in the ROM **111** as required, the FROM **113** for storing data, a CCD **114** for converting light obtained through the lens **104** into image information, and a capture section **115** for capturing digital still-picture data from dynamically changing digital information in the CCD **114.** The FROM **113** may be omitted if the contents in the RAM **112** can be backed up by use of the battery **105.** In this relation, another button battery may be provided for the backing-up. As the count display **109,** any display devices including a liquid crystal display device may be used.

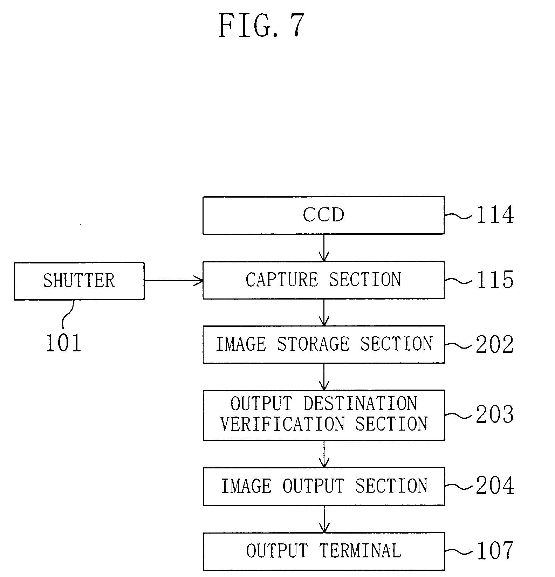

FIG. **7** illustrates a detailed construction of the digital camera **1** in the system of FIG. **1.** Referring to FIG. **7,** an image storage section **202** stores a photograph image taken, an output destination verification section **203** verifies whether or not the terminal **2** is an authorized terminal when the digital camera **1** is connected to the terminal **2,** and an image output section **107** outputs the photograph image in the image storage section **202** via the output terminal **107.**

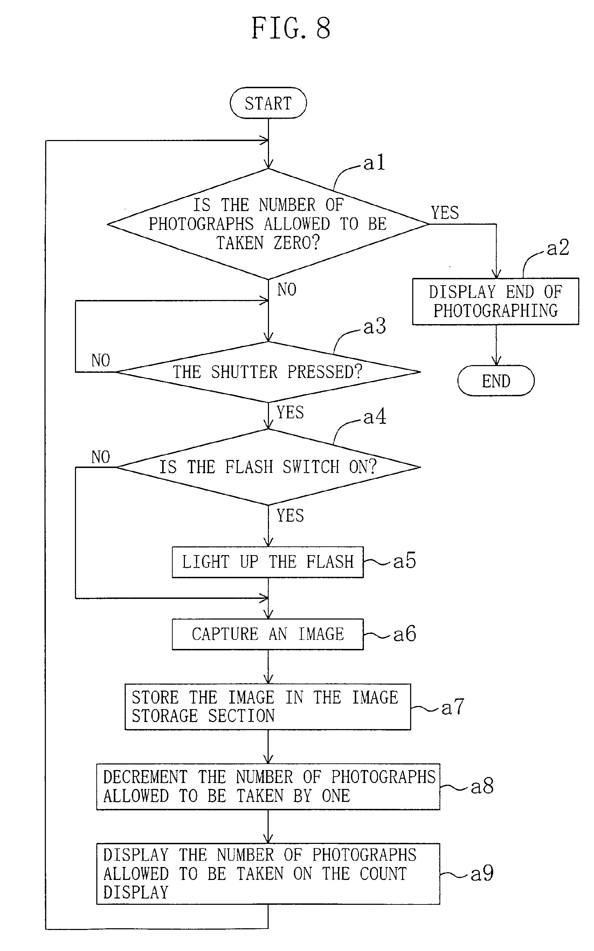

FIG. **8** shows the photographing operation of the digital camera **1** in the system of FIG. **1.** First, in step **a1**, the capacity of the image storage section **202** is examined to determine whether or not the number of remaining photographs allowed to be taken is zero. If it is zero, the process proceeds to step **a2,** where the fact that all the photographs allowed have been taken is displayed on the count display **109,** and the process is terminated. In step **a3,** whether or not the shutter **101** has been pressed is detected. If the shutter **101** has been pressed, the process proceeds to step **a4,** where whether or not the flash switch **108** is ON is examined. If it is ON, the process proceeds to step **a5.** Otherwise, the process proceeds to step **a6.** In step **a5,** the flash **102** is lit. In step **a6,** the image data obtained through the CCD **114** is captured by the capture section **115.** In step **a7,** the image data captured in step **a6** is stored in the image storage section **202.** In step **a8,** the number of remaining photographs allowed to be taken of the counter is decremented by one. In step **a9,** the counter value obtained in step **a8** is displayed on the count display **109.** The process then returns to the start.

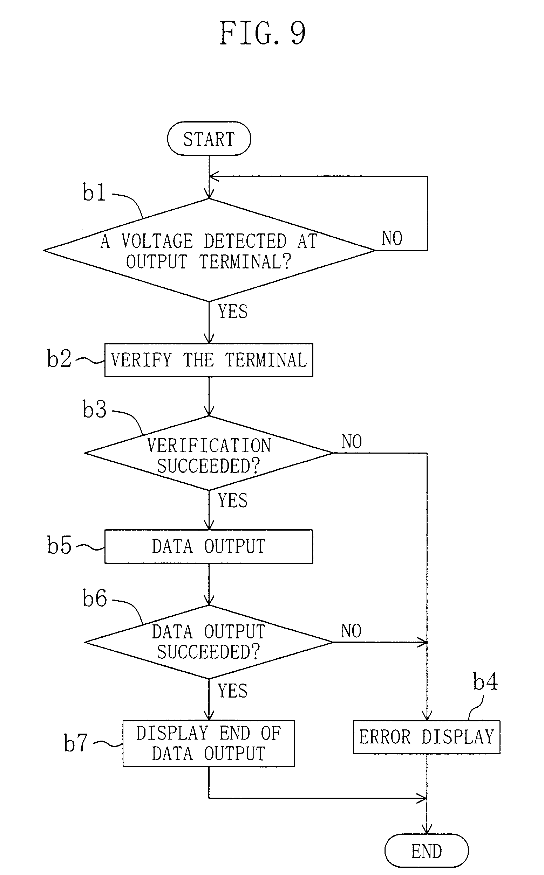

FIG. **9** shows the image output operation of the digital camera **1** in the system of FIG. **1.** First, in step **b1**, connection of the digital camera **1** to the terminal **2** is determined by examining whether or not a voltage is detected at the output terminal **107.** If a voltage is detected, the process proceeds to step **b2**, where whether or not the terminal is an authorized terminal is verified by the output destination verification section **203.** This verification of the terminal is performed for the purpose of keeping the recovery rate of the digital cameras from decreasing by blocking retrieval of data in the digital camera for recycling by an unauthorized apparatus. This function can also be used for the purpose of ensuring optimum printing by the terminal that can identify the specifications of the digital camera such as the type and resolution thereof. In step **b3**, whether or not the verification in step **b2** has succeeded is determined. If succeeded, the process proceeds to step **b5**. Otherwise, the process proceeds to step **b4**, where occurrence of the error is displayed on the count display **109,** and the process is terminated. In step **b5**, all the image data taken are transferred to the terminal **2** from the image output section **204.** In step **b6**, whether or not the data output has succeeded is examined. If succeeded, the process proceeds to step **b7**. Otherwise, the process proceeds to step **b4**. In step **b7**, the fact that the data output has succeeded is displayed on the count display **109,** and the process is terminated.

In the illustrated example, the digital camera **1** includes the FROM **113** for storing images and the output destination verification section **203** for blocking retrieval of data by an unauthorized terminal. Alternatively, a semiconductor memory provided with the verification function, such as a SD memory card, may be used in place of the FROM **113** and the output destination verification section **203.**

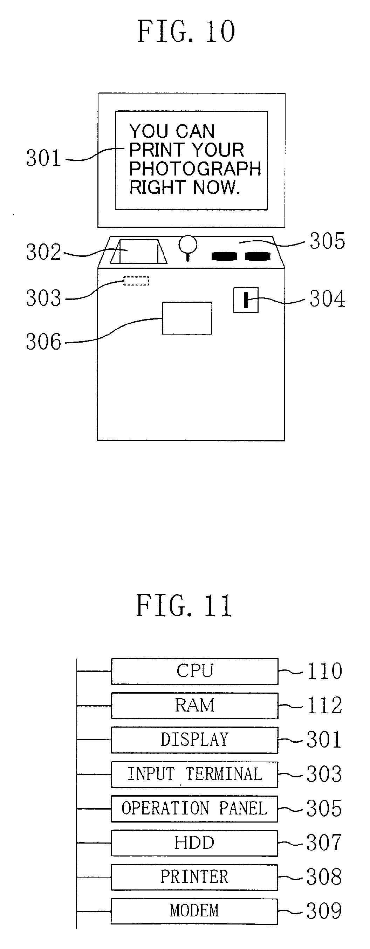

FIG. **10** is an external view of the terminal **2** in the system of FIG. **1,** and FIG. **11** illustrates a schematic construction of the terminal **2.** Referring to FIG. **10,** the terminal **2** includes: a display **301** for displaying a graphical user interface (GUI); a camera receiving recess **302** in which the digital camera **1** is placed; an input terminal **303** to which the digital camera **1** is connected; a coin insertion slot **304** through which the charge is paid; a operation panel **305** for manipulating the GUI; and a photograph outlet **306** to which a printed photograph is ejected. Referring to FIG. **11,** the terminal **2** further includes: a HDD **307** for storing a program and data; a printer **308** for printing a digital image on a sheet; and a modem **309** for accessing the Internet. The illustrated system is constructed to use the modem under the dial-up connection. The terminal unit may otherwise be constructed to use other communication infrastructures such as ISDN and FTTH. The operation panel may be integrated with the display by using a touch-panel display.

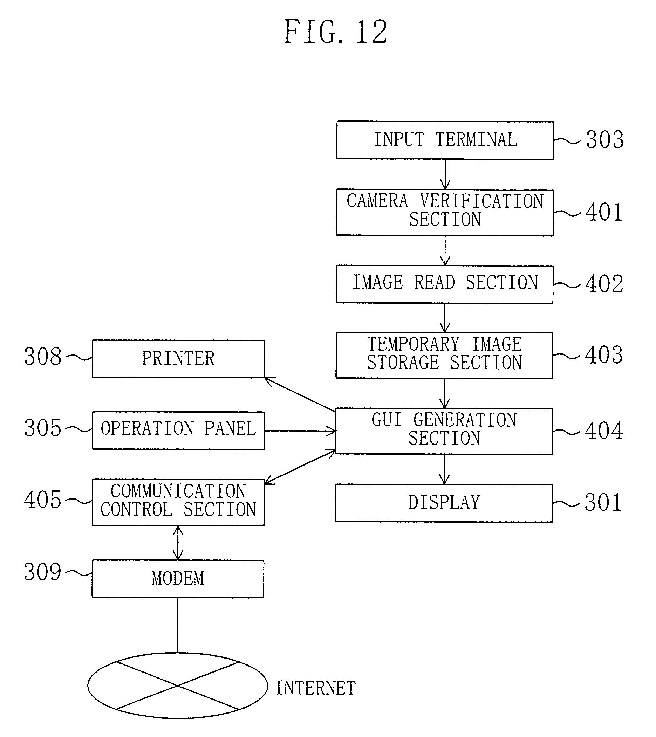

FIG. **12** illustrates a detailed construction of the terminal **2** in the system of FIG. **1.** Referring to FIG. **12,** a camera verification section **401** verifies that the digital camera connected to the input terminal **303** is of a compatible type. An image read section **402** reads image data from the connected digital camera **1.** A temporary image storage section **403** temporarily stores the image data read by the image read section **402.** A GUI generation section **404** changes the GUI display in response to the input through the operation panel **305** and the like. A communication control section **405** establishes communications with the advertising server **3** and the like by use of the modem **309.**

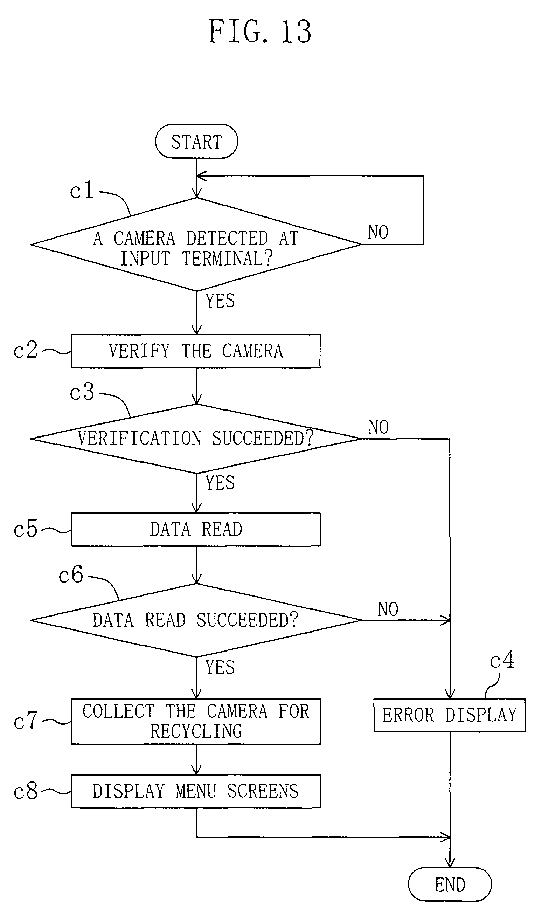

FIG. **13** shows the operation of reading data from the digital camera **1** performed by the terminal **2** in the system of FIG. **1.** First, in step **c1**, whether or not the digital camera **1** has been connected to the input terminal **303** is examined. If connected, the process proceeds to step **c2,** where whether or not the connected digital camera **1** detected in step **c1** is of a compatible type is verified. In step **c3,** whether or not the verification in step **c2** has succeeded is examined. If succeeded, the process proceeds to step **c5.** Otherwise, the process proceeds to step **c4,** where occurrence of the error is displayed on the display **301,** and the process is terminated. In step **c5,** all the image data are read from the digital camera **1.** During the read operation, the camera body may be locked to the terminal so that the digital camera **1** is prevented from disjoining from the input terminal **303.** In step **c6,** whether or not the data read has succeeded is determined. If succeeded, the process proceeds to step **c7.** Otherwise, the process proceeds to step **c4.** In step **c7,** a lid provided to cover the camera receiving recess **302** is closed, for recovery of the digital camera **1.** Step **c7** is skipped if it has been found that this digital camera is not recyclable during the verification in step **c2.** In step **c8,** GUIs guiding the procedure for printing the read photograph are displayed, and the process is terminated.

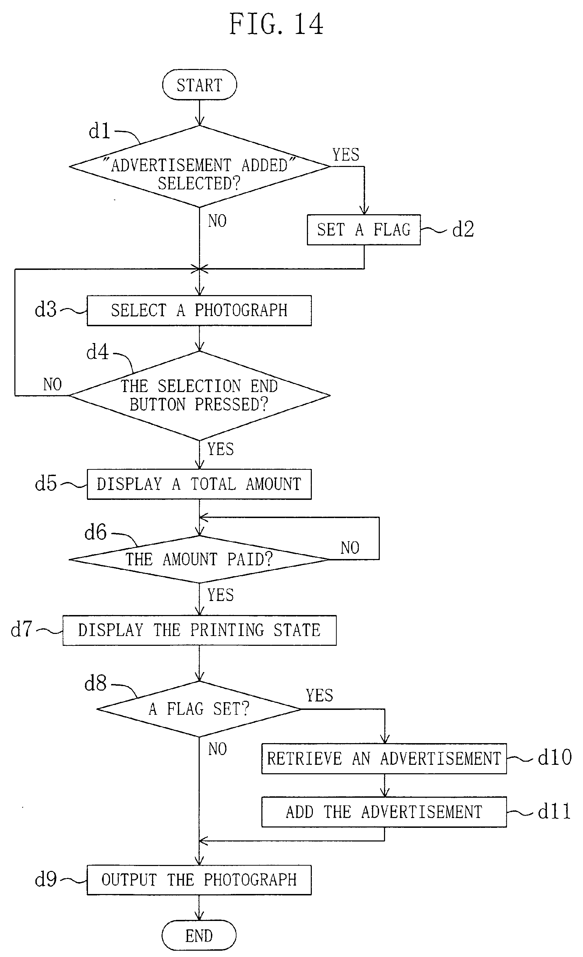

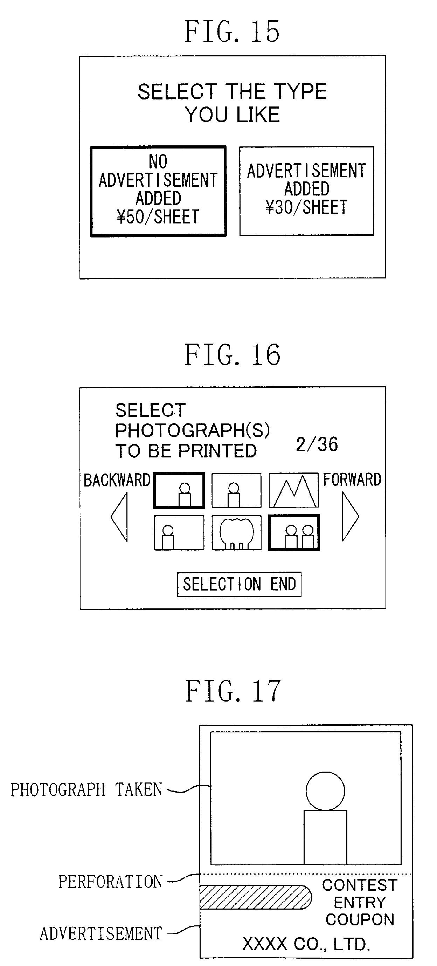

FIG. **14** shows the operation of printing a photograph performed by the terminal **2** in the system of FIG. **1.** First, in step **d1**, the GUI shown in FIG. **15** is displayed, and whether or not the option "advertisement added" has been selected via the operation panel **305** is examined. If selected, the process proceeds to step **d2.** Otherwise, the process proceeds to step **d3.** In step **d2,** a flag is set to distinguish the selection of "advertisement added". In step **d3,** the GUI shown in FIG. **16** is displayed to allow selection of a photograph desired via the operation panel **305.** This selection is performed in a general manner of manipulating a stick to move a cursor and pressing a button to confirm the entry. In step **d4,** whether or not the selection end button has been pressed is examined. If pressed, the process proceeds to step **d5.** Otherwise, the selection in step **d3** is continued. In step **d5,** the total amount of charge, calculated from the number of selected photographs and the state of the flag, is displayed prompting to drop coins in the slot. In step **d6,** whether or not the amount displayed in step **d5** has been paid is examined. If paid, the process proceeds to step **d7,** where the outline of the print is displayed on the display **301.** In step **d8,** whether or not the flag of "advertisement added" has been set is examined. If set, the process proceeds to step **d10**. Otherwise, the process proceeds to step **d9,** where the selected photograph is output via the printer **308,** and the process is terminated. In step **d10**, advertisement data is retrieved from the advertising server **3.** More types of advertisements should be retrieved as the number of selected photographs increases. For example, assuming that the advertising server **3** has five types of advertisements, four types of advertisements are randomly retrieved if the number of photographs is less than five, and all the five types are retrieved if the number of photographs is five or more. In step **d11,** the advertisement retrieved in step **d10** is added to the selected photograph. When the number of selected photographs is greater than the number of types of advertisements, the advertisements are randomly selected for the excessive photographs.

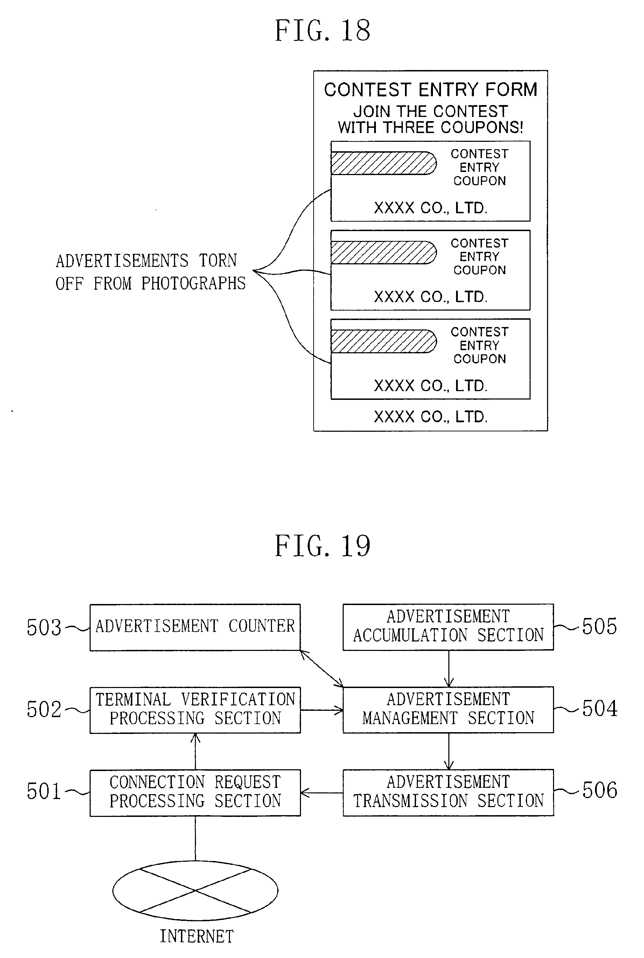

FIG. **17** shows an example of the synthesized print output when the option "advertisement added" was selected. In FIG. **17,** the selected photograph is printed on the upper part of the print while the advertisement is printed on the lower part. The printing sheet may be perforated as the example in FIG. **17** so that the advertisement part can be torn off from the photograph part. This will afford convenience to the advertiser who intends to launch a campaign such as a prize contest urging the users to collect a plurality of torn-off advertisement coupons and send an entry form as shown in FIG. **18.** In addition, for users who are to store printed photographs, the storage space can be saved by tearing off the advertisement part.

In the illustrated example, the advertisement data are held by the advertising server **3.** Alternatively, a cache may be provided in the HDD **307** of the terminal **2,** and the type of advertisement that has been previously retrieved may be held in the cache. In this case, the advertising server **3** may only be notified of the use. As yet another method, the terminal **2** may periodically download advertisement data from the advertising server **3,** and simultaneously notify the advertising server **3** of the number of advertisements actually printed. The system of the present invention may also be applied to commercially available semiconductor memories such as compact flash (CF) cards. That is, a reader for reading image data accumulated in such a semiconductor memory may be provided in the system, in place of the camera receiving recess **302** and the input terminal **303,** to enable execution of the procedures of steps **d1** through **d11** for the image data while omitting the procedures of steps **c1** through **c8.**

FIG. **19** illustrates a detailed construction of the advertising server **3** in the system of FIG. **1.** Referring to FIG. **19,** a connection request processing section **501** processes a connection request from the terminal **2,** and a terminal verification processing section **502** verifies the terminal that has sent a connection request. An advertisement counter **503** counts the number of advertisements added to photograph prints at the terminal **2** for each type. An advertisement management section **504** manages updating of the advertisements to be distributed to the terminal **2** by examining the time stamps and the like attached to the advertisements. An advertisement accumulation section **505** accumulates advertisement data, and an advertisement transmission section **506** transmits advertisement data to the terminal **2.** Note that the advertisements in the advertisement accumulation section **505** are updated by the operator for the advertising server **3.**

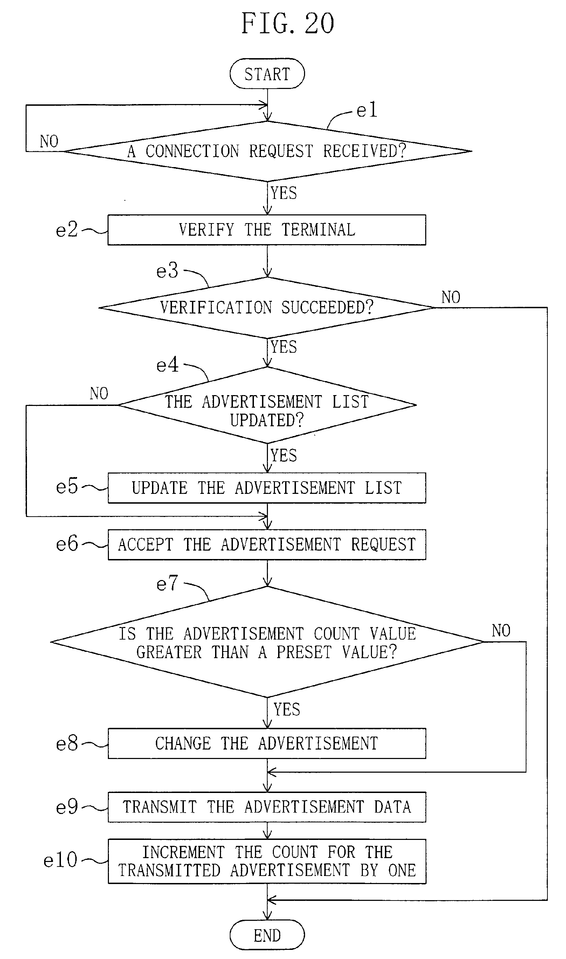

FIG. **20** shows the advertisement distribution operation of the advertising server **3** in the system of FIG. **1.** In this embodiment, assume that an advertisement list has been distributed in advance to the terminal **2,** and at the synthesis of a print, the advertisement to be added to a photograph is determined and the determined advertisement data is retrieved from the advertising server **3.** Assume also that whenever advertisement data is updated, the terminal **2** downloads an updated advertisement list from the advertising server **3.** Moreover, assume that the advertisement supplier can set the upper limit for the advertisement counter **503** for each advertisement data so as to prevent the advertisement cost from greatly exceeding a predicted value due to unexpectedly high use rate. In step **e1**, whether or not a connection request from the terminal **2** has been received is examined. If received, the process proceeds to step **e2,** where the terminal **2** is verified by requesting the terminal **2** to send its ID and password. In step **e3,** whether or not the verifi-password. In step **e3,** whether or not the verification of the terminal **2** has succeeded is examined. If succeeded, the process proceeds to step **e4.** Otherwise, the process is terminated. In step **e4,** whether or not updating has been made for the advertisement data in the advertisement accumulation section **505** is examined. If made, the process proceeds to step **e5.** Otherwise, the process proceeds to step **e6.** In step **e5,** the advertisement list in the terminal **2** is updated. In step **e6,** the advertisement request from the terminal **2** is accepted. In step **e7,** whether or not the counter value for the requested advertisement has exceeded a preset value is examined. If the value has exceeded, the process proceeds to step **e8.** Otherwise, the process proceeds to step **e9.** In step **e8,** the advertisement is changed to one for which the advertisement counter value is minimum. In step **e9,** the advertisement data is read from the advertisement accumulation section **505** and transmitted to the terminal **2.** In step **e10**, the counter value for the advertisement data transmitted in step **e9** is incremented by one.

In this embodiment, the counters **503** for the respective advertisement data added to the photograph prints are collectively managed by the advertising server **3.** This enables the advertising server **3** to bill each advertiser for the advertisement charge corresponding to the number of prints to which the advertisement was added. Specifically, as shown in FIGS. **3** and **4,** the advertising server **3** outputs a billing statement corresponding to the count of the advertisement counter **503** to each advertiser. Part of the received payment is passed on to compensate the discount of the prints, and the remainder can be the income from the advertising.

In this embodiment, advertisement data from advertisers are stored in the advertising server **3.** Alternatively, character-featuring designs may be provided as a tie-up project with an amusement park or the like and added to photographs of users who want the designs at value-added charges.

The maintenance server **4** will be described. The terminal **2** notifies the maintenance server **4** of occurrence of any inconvenience such as out of paper, out of ink, and paper jam when such inconvenience occurs by use of the network connection function of the terminal **2.** By this operation, swift maintenance of the terminal **2** is attained.

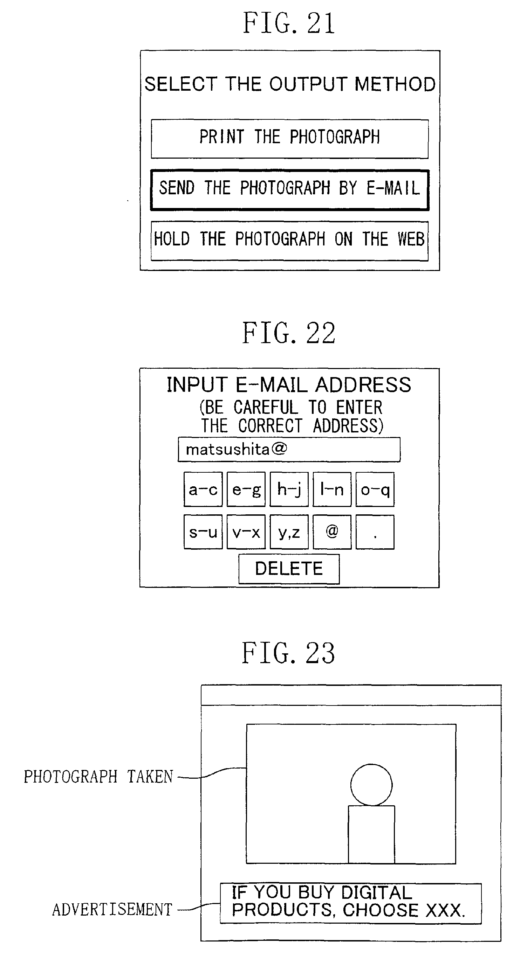

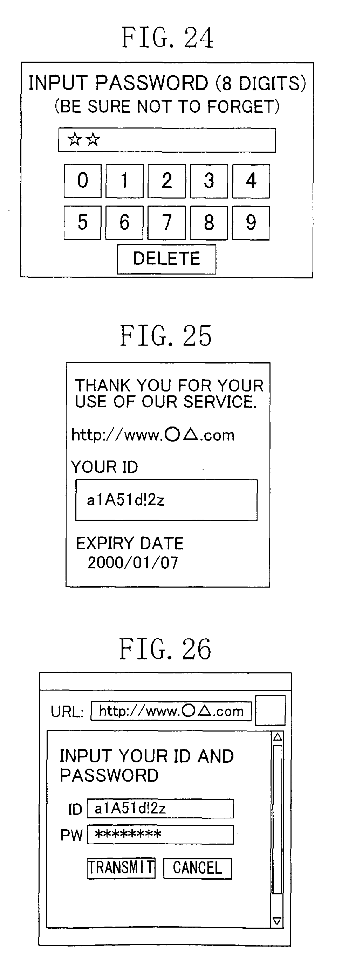

The photograph data may also be transmitted by e-mail from the terminal **2.** In the above embodiment, data read by the terminal **2** from the digital camera **1** was printed with the printer **308.** Alternatively, the read photograph data may be sent by e-mail to a desired destination by use of the modem **309** and the communication control section **405.** To realize this function, after a photograph is selected at the GUI shown in FIG. **16,** for example, the GUI shown in FIG. **21** may be displayed to prompt the user to select the method by which the photograph is output. If the option "send the photograph by e-mail" is selected, the GUI for input of an e-mail address as shown in FIG. **22** is displayed on the display **301.** As in the case of printing the photograph, if the option "advertisement added" had been selected, the resultant photograph data attached to the e-mail includes an advertisement as shown in FIG. **23.** According to this method, it is possible, for example, to send a picture card to a friend from the terminal **2** on the road. Characters can be written on the image or a message can be input by use of a touch pen or the like. Naturally, the photograph data may be sent to the user's own e-mail address to be processed later by the user for use in a greeting card and the like.

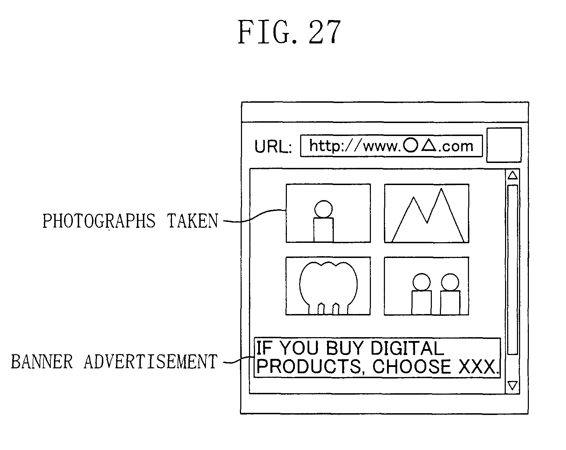

If the option "hold the photograph on the Web" is selected as the photograph output destination shown in FIG. **21,** the GUI for setting a password as shown in FIG. **24** is displayed. Setting of the user's password is requested to prevent access of an outsider to the photograph data. Once the photograph is held in the photograph server **5** on the Web, the terminal **2** outputs a card as shown in FIG. **25.** Since only a limited amount of data can be held on the Web, it is realistic to hold photograph data for only a limited period of time. The card shown in FIG. **25** includes the address for accessing the Web, the ID, and the expiry date until which the photograph data is held. The password is not printed to prevent access of an outsider to the photograph data in case that the card is lost. When the user accesses the photograph server **5,** a screen as shown in FIG. **26,** for example, is displayed. By inputting the ID found on the card and the password set at the GUI shown in FIG. **24,** a screen as shown in FIG. **27** is displayed. The screen includes the photographs taken displayed in a thumbnail sketch and a banner advertisement arranged at a predetermined position. The user is now allowed to download the photograph data freely. According to this method, for example, the user can go to a pleasure resort without carrying a camera and rent a digital camera at the resort to take photographs. Afterwards, the user can process the photographs freely, and also share the photograph data with a friend by notifying the friend of the ID and the password. It should be noted that the illustrated GUIs and the Web registration information card shown in FIG. **25** are mere examples. For these GUIs and cards, other designs may be adopted.

Naturally, the function of selecting "advertisement added" or "no advertisement added" may be omitted, so that an advertisement is always added to a photograph.

While the present invention has been described in a preferred embodiment, it will be apparent to those skilled in the art that the disclosed invention may be modified in numerous ways and may assume many embodiments other than that specifically set out and described above. Accordingly, it is intended by the appended claims to cover all modifications of the invention that fall within the true spirit and scope of the invention.

## Claims

1. A digital photograph system comprising:
a camera having a function of storing data of a digital photograph taken; and
a terminal for reading the photograph data stored in the camera, outputting the photograph data, and thereafter collecting the camera for recycling.

2. The digital photograph system of Claim 1, wherein the camera includes means for verifying an apparatus that reads the photograph data, to prevent the photograph data from being read from the camera by an apparatus other than a predetermined terminal.

3. The digital photograph system of Claim 1, wherein the terminal includes a printer for printing the photograph data read from the camera.

4. The digital photograph system of Claim 1, further comprising a maintenance server connected to the terminal via a network, wherein the terminal has a function of notifying the maintenance server of an inconvenience occurring in the terminal.

5. The digital photograph system of Claim 1, wherein the terminal has a function of transmitting the photograph data read from the camera by e-mail.

6. The digital photograph system of Claim 1, further comprising a photograph server connected to the terminal via a network, wherein the terminal has a function of entering the photograph data read from the camera in a predetermined Web page of the photograph server.

7. A digital photograph system comprising:
a camera having a function of storing data of a digital photograph taken;
a terminal for reading the photograph data stored in the camera and outputting the photograph data; and
an advertising server connected to the terminal via a network,
wherein the advertising server provides advertisement data to be added to the photograph data output from the terminal.

8. The digital photograph system of Claim 7, wherein the advertising server has a function of distributing an updated advertisement list to the terminal.

9. The digital photograph system of Claim 7, wherein the advertising server includes a counter for counting the number of times of supply of the advertisement data to the terminal, and has a function of outputting a billing statement corresponding to the count value of the counter to an advertiser.

10. The digital photograph system of Claim 7, wherein the terminal has a printer for printing the photograph data read from the camera together with the advertisement data supplied from the advertising server.

11. The digital photograph system of Claim 10, wherein an output of the printer includes perforation at the boundary of a photograph data printed part and an advertisement data printed part.

12. The digital photograph system of Claim 7, further comprising a maintenance server connected to the terminal via a network, wherein the terminal has a function of notifying the maintenance server of an inconvenience occurring in the terminal.

13. The digital photograph system of Claim 7, wherein the terminal has a function of transmitting the photograph data read from the camera by e-mail together with the advertisement data supplied from the advertising server.

14. The digital photograph system of claim 7, further comprising a photograph server connected to the terminal via a network, wherein the terminal has a function of entering the photograph data read from the camera together with the advertisement data supplied from the advertising server in a predetermined Web page of the photograph server.
